## Europäisches Patentamt

## European Patent Office

## Office européen des brevets

(19)

(11) Veröffentlichungsnummer: **0 236 804**
**B1**

(12) **EUROPÄISCHE PATENTSCHRIFT**

(45) Veröffentlichungstag der Patentschrift:
**29.03.89**

(51) Int. Cl.⁴: **B66F 17/00**

(21) Anmeldenummer: **87102272.9**

(22) Anmeldetag: **18.02.87**

(54) **Verfahren zum Signalisieren der Be- und Überlastung.**

(30) Priorität: **05.03.86 DE 3607135**

(43) Veröffentlichungstag der Anmeldung:
**16.09.87 Patentblatt 87/38**

(45) Bekanntmachung des Hinweises auf die Patenterteilung:
**29.03.89 Patentblatt 89/13**

(84) Benannte Vertragsstaaten:
**AT BE CH DE ES FR GB GR IT LI LU NL SE**

(56) Entgegenhaltungen:
**EP-A- 0 154 069**
**DE-A- 2 338 098**
**DE-A- 3 018 225**
**FR-A- 1 105 555**
**FR-A- 2 499 053**
**GB-A- 1 155 191**
**US-A- 3 757 066**
**US-A- 4 398 860**
**US-A- 4 516 116**

(73) Patentinhaber: **Feldmühle Aktiengesellschaft,**
**Fritz-Vomfelde-Platz 4, D-4000 Düsseldorf 11(DE)**

(72) Erfinder: **Riedesser, Franz, Altdorfstrasse 7,**
**D-7982 Baienfurt(DE)**

ACTORUM AG

## Beschreibung

Die Erfindung betrifft ein Verfahren und eine Vorrichtung zum Signalisieren der Be- und Überlastung von hydraulisch betätigten Ladeplattformen, Auslegern, Kränen und insbesondere Gabelstaplern, bei denen der jeweilige Druck im Hub- und Neigezylinder durch Druckmeßfühler erfaßt, in elektrische Signale umgewandelt und ggf. nach Verstärkung in optische und/oder akustische Signale umgesetzt wird.

Die Sicherheitsanforderungen, die an Lade- und Transportgeräte gestellt werden müssen, sind durchaus unterschiedlicher Art, auch wenn alle diese Einrichtungen mit Hub- und Neigezylindern ausgerüstet sind. Da die Anforderungen jedoch dann besonders hoch sind, wenn es sich um ortsbewegliche Aggregate handelt, soll die Erfindung nachstehend am Beispiel der Gabelstapler beschrieben werden, ohne sie jedoch darauf zu beschränken.

Aus der DE-OS 3 018 225 ist ein Verfahren bekannt, bei dem der belastungshaltende Druckraum des Neigungszylinders mit einem Drucksensor verbunden ist, der durch eine Signalverbindung über ein Erfassungsglied als Signalgeber für den Fahrantrieb dient, wobei in diesen Signalgeber auch zusätzliche Signale entsprechend der Hubhöhe einspeisbar sind. Die erzeugten Signale dienen zur Geschwindigkeitsbegrenzung des Fahrantriebs. Eine Überlastungsanzeige ist nicht vorgesehen, es ist auch nicht zu entnehmen, aufgrund welcher Art von Belastung die Fahrgeschwindigkeit reduziert bzw. auf Null gebracht wird.

Aus der DE-OS 3 203 553 ist bekannt, bei einem Gabelstapler im Hub- und im Neigezylinder Meßfühler anzuordnen und die daraus resultierenden Werte einem Rechner zuzuführen, der die Schwerpunktslage der auf die Gabel aufgeladenen Frachtlast berechnet und, basierend auf dieser Berechnung, ein nach vorne gerichtetes Umkippen des Gabelstaplers vorhersagt, wobei diese Vorhersage bildlich dargestellt werden kann.

Den zitierten Schriften aus dem Stand der Technik ist gemeinsam, daß sie davon ausgehen, ein Gabelstapler würde bei Überlastung nach vorn umstürzen. Diese Gefahr wird deshalb auch in der bildlichen Darstellung im Führerstand des Gabelstaplers gemäß der DE-OS 3 203 553 angezeigt. Unfälle, die auf das Umkippen eines Staplers nach vorn zurückzuführen sind, sind in der Praxis jedoch äußerst selten. Weit höher ist die Gefahr zu werten, die in der mangelnden Fahrsicherheit liegt. Unter Last werden bei Gabelstaplern die Vorderräder erheblich belastet und gleichzeitig die Hinterräder entlastet, so daß die Lenkstabilität in Frage gestellt ist. Versuche an einem Gabelstapler mit 2 Tonnen Nenntraglast haben ergeben, daß die Belastung der Hinterräder im leeren, also unbeladenen Zustand, 1.900 Newton betrug. Im belasteten Zustand, also nach Aufbringen der Nennlast von 2 Tonnen betrug die Belastung der Hinterräder nur noch 500 Newton. Daraus ergibt sich, daß bei geringfügiger Überlastung das Steuerverhalten des Fahrzeuges bereits unberechenbar wird, da die Haftung der Räder auf dem Boden zu weit reduziert wurde. Hinzu kommt das Beharrungsvermögen, das durch die Last ganz krass verändert wird, d.h., daß der beladene Stapler das Bestreben hat, die Richtung beizubehalten, in der er fährt. Wird also im voll beladenen Zustand des Staplers eine Richtungsänderung angestrebt, so spricht zwar die Lenkung an, aufgrund der verringerten Haftung zum Boden behält das Fahrzeug im wesentlichen die ursprüngliche Richtung jedoch bei, insbesondere, wenn die Geschwindigkeit des Fahrzeuges relativ hoch war. Daraus ergibt sich als weiterer Punkt, daß bei Belastung in Nähe der Nennbelastung die Geschwindigkeit reduziert werden muß, ebenso wie die Belastung und die Geschwindigkeit den Bodenverhältnissen angepaßt werden muß, weil Unebenheiten im Boden, beispielsweise Bahnschwellen, die überquert werden müssen, eine stoßartige Belastung an den Stapler weitergeben. Diese Stoßbelastung kann zu erheblichen mechanischen Schäden am Stapler führen und stellt in jedem Fall eine Überlastung dar, die zur Anzeige gebracht werden muß.

Die theoretisch ideale Lösung wäre eine zunehmende Belastung der Hinterachse beim Aufnehmen der Last, um zu gewährleisten, daß der Andruck der Hinter- und damit der Lenkachse auf dem Boden möglichst konstant bleibt. Hierzu existierende Vorschläge sind jedoch nicht praxisgerecht durchführbar. Damit ist weiterhin, insbesondere bei Bergabfahrt oder beim Bremsen, das Halten der Spur schon bei Nennlast und abschüssiger Wegstrecke nicht mehr gewährleistet.

Bei den Geräten nach dem Stand der Technik erfolgt wohl eine Überlastungsanzeige im Moment des Aufnehmens der Last, es ist aber, wenn diese Anzeige nicht erfolgt, nicht festzustellen, welche Sicherheit für den Fahrbetrieb noch vorhanden ist. Damit kann durchaus der Fall eintreten, daß eine in der Ebene aufgenommene Last, die bergab transportiert werden muß, erst dann zur Überlastungsanzeige führt, wenn der Staplerfahrer auf eine bestimmte Neigung des Weges kommt. Er kann des weiteren auch nicht erkennen, worauf die Überlastung zurückzuführen ist, also ob die Last als solche zu schwer ist, oder ob der Angriffspunkt der Last, d.h. die Lage der Last auf der Gabel, zu weit nach vorne verlagert ist.

Nachteilig bei den bekannten Aggregaten ist ferner, daß sie auf der einen Seite sehr aufwendig sind, auf der anderen Seite aber auch sehr empfindlich, so daß sie für den rauhen Staplerbetrieb ungeeignet sind. Diese Aussage gilt insbesondere für Aggregate gemäß der DE-OS 3 203 553, bei denen noch hinzukommt, daß die Anzeige erst nach einer bestimmten Zeitdauer erfolgt und vom Fahrer durch Knopfdruck angefordert und auch gelöscht werden muß. Während des Fahrbetriebes ist der Fahrer mit solchen zusätzlichen Handlungen überfordert, weil er sich voll auf Lenkung und Lastbewegung konzentrieren muß, so daß er bereits mit beiden Händen beschäftigt ist und nicht noch eine dritte Funktion damit ausüben kann. In der Praxis hat sich deshalb auch keiner der Vorschläge bisher durchsetzen können, d.h., daß die Stapler weiterhin mit Hinweisschildern ausgerüstet sind, die das zugeordnete Lastdiagramm angeben, was aber eine absolut unzureichende Angabe ist, weil in den meisten Fällen dem Staplerfahrer das Gewicht der aufzunehmenden Last nicht bekannt ist.

Der Erfindung liegt damit die Aufgabe zugrunde, ein Anzeigegerät zu schaffen, das es ermöglicht, die Belastung kontinuierlich anzuzeigen und die Ursachen der Überlastung zu erkennen, d.h. festzustellen, ob die Überlastung durch zu hohes Gewicht oder durch die Neigung des Tragarmes bzw. die Anordnung der Last auf dem vorderen Bereich der Gabeln verursacht wird. Des weiteren soll angezeigt werden, wieviel Sicherheit nach Lastaufnahme noch vorhanden ist, so daß unter Einbezug dieser Sicherheit auch gefahrlos ein Gefälle oder eine holperige Wegstrecke befahren werden kann.

Diese Aufgabe wird gelöst durch ein Verfahren zum Signalisieren der Be- und Überlastung von hydraulisch betätigten Ladeplattformen, Auslegern, Kränen und insbesondere Gabelstaplern, bei denen der jeweilige Druck im Hub- und Neigezylinder durch Druckmeßfühler erfaßt, in elektrische Signale umgewandelt und ggf. nach Verstärkung in optische und/oder akustische Signale umgesetzt wird, mit dem kennzeichnenden Merkmal, daß die vom Druck im Hub- und Neigezylinder erzeugten elektrischen Signale je einer Leuchtdiodenreihe zugeführt werden, deren einzelne Leuchtdioden auf jeweils einen bestimmten, durch den jeweiligen Druck erzeugten elektrischen Wert ansprechen, wobei die Anzahl der aufleuchtenden Leuchtdioden mit zunehmendem Druck steigt und bei Überschreitung einer bestimmten Anzahl aufleuchtender Leuchtdioden ein optisches und/oder akustisches Signal ausgelöst wird.

Die Verwendung einer Leuchtdiodenreihe stellt eine sehr einfache und auch kostengünstige Möglichkeit dar, den jeweils in einzelnen Zylindern herrschenden Druck anzuzeigen. Die Dioden sind, da sie nur wenig Platz einnehmen, auch ohne Schwierigkeiten im Sichtfeld des Staplerfahrers, d.h. im Bereich des Armaturenbrettes, unterzubringen. Sie können durch eine elastische Lagerung weitgehend erschütterungsfrei angeordnet werden und sind als solche robust genug, um dem rauhen Fahrbetrieb eines Gabelstaplers standhalten zu können.

Aus der Anzahl der aufleuchtenden Leuchtdioden ist für den Fahrer sofort zu erkennen, ob eine Überlastung vorliegt und worauf diese Überlastung zurückzuführen ist. Leuchtet die mit dem Hubzylinder verbundene Leuchtdiodenreihe weitgehend auf, so handelt es sich um eine relativ schwer zu hebende Last. Übersteigt die Anzahl der aufleuchtenden Leuchtdioden die zulässige Zahl, so ist diese Last bereits zu schwer und der Stapler kann für diese Arbeit nicht eingesetzt werden. Leuchtet dagegen andererseits die dem Neigezylinder zugeordnete Leuchtdiodenreihe weitgehend auf, so kann das daran liegen, daß die Gabel nicht weit genug unter das zu transportierende Gut geschoben worden ist, d.h. die Überlastung tritt auf, weil der Angriffspunkt der Last im zu großen Abstand zum Drehpunkt, also zu den Vorderrädern, sich befindet. Die gleiche Anzeige kann erscheinen, wenn der Hubmast des Staplers zu weit nach vorne geneigt ist. In beiden Fällen kann zunächst der Versuch wiederholt werden, die Last aufzunehmen, wobei im ersteren die Last weiter auf die Gabel aufgebracht werden muß und im zweiten Fall der Hubzylinder so weit eingefahren werden muß, daß keine Neigung nach vorn, sondern besser eine Neigung nach hinten, also zum Fahrer hin, erfolgt.

Eine bevorzugte Ausgestaltung der Erfindung sieht vor, daß die Belastung im Druck- und Neigezylinder durch die Leuchtdiodenreihen kontinuierlich angezeigt wird. Durch diese Maßnahme ist jederzeit der Belastungszustand sichtbar, ohne daß zusätzliche Maßnahmen, wie Ein- und Ausschalten der Anzeigevorrichtung, erforderlich sind. Diese selbsttätige Art der Anzeige führt auch zum selbsttätigen Auslösen eines akustischen Signales, so daß im Gefahrenfalle nicht nur der Fahrer, sondern auch in der Umgebung befindliche Personen gewarnt werden.

Mit Steigerung der Belastung auf der Gabel wird gleichzeitig der rückwärtige Bereich des Staplers entlastet, so daß die Haftung zwischen den Lenkrädern und dem Boden verringert wird. Eine vorteilhafte Ausgestaltung der Erfindung sieht deshalb vor, daß die dem Hubzylinder zugeordnete Leuchtdiodenreihe die im jeweiligen Belastungszustand vorhandene Lenkstabilität anzeigt. Je mehr Dioden aufleuchten, desto geringer ist die Fahrsicherheit, d.h., daß der Fahrer gehalten ist, die Geschwindigkeit wesentlich zu reduzieren, obwohl noch keine Überlastung vorliegt.

Allein durch die einfache Anordnung von zwei Leuchtdiodenreihen ist es damit möglich, den Lastzustand exakt zu beurteilen und auch Maßnahmen zu treffen, ihn zu verändern und so einen sicheren Transport einer Last noch durchführen zu können. Das optische Signal, das bei Überschreiten der zulässigen Last, also bei Überschreiten der bestimmten Anzahl aufleuchtender Leuchtdioden, ausgelöst wird, ist zweckmäßig ein rot blinkendes Aggregat, das zusätzlich mit einem Horn gekoppelt werden kann, so daß gleichzeitig mit der optischen Warnung durch das Blinken ein akustisches Signal ausgelöst wird.

Vorteilhaft ist dabei das akustische Signal, das von der Frequenz der üblichen im Fahrbetrieb benutzten Hupen abweicht. Es ist dadurch sofort als Überlastungssignal zu erkennen und macht des weiteren die in der Nähe arbeitenden Personen auf diese Überlastung aufmerksam, so daß sie von sich aus die nötigen Schritte unternehmen können, um entweder der drohenden Gefahr aus dem Wege zu gehen, oder aktiv bei der Beseitigung der Gefahr mitzuhelfen.

Eine vorteilhafte Ausgestaltung der Erfindung sieht vor, daß einander zugeordnete Leuchtdioden von Hub- und Neigezylinder bei unterschiedlicher Druckbeaufschlagung anzeigen.

Abhängig von der Belastbarkeit des Staplers, der beispielsweise für zwei Tonnen ausgelegt ist, ergibt sich im Hubzylinder ein Druck, der dieser Maximallast von zwei Tonnen entspricht. Die Belastung des Neigezylinders ist dabei wesentlich geringer, d.h., daß unterschiedliche Druckmeßfühler in Hub- und in Neigezylinder eingebaut werden müssen und daß auch die jeweiligen Ansprechdrücke der Diodenreihen damit unterschiedlich sind.

Eine weitere vorteilhafte Ausgestaltung der Erfindung sieht vor, daß mit Zunehmen des Ansprechdruckes die zum Aufleuchten der Leuchtdioden erforderliche Druckdifferenz zwischen einander folgenden Leuchtdioden geringer wird, d.h., daß im oberen Lastbereich die Ablesegenauigkeit höher ist und damit die Möglichkeit gegeben ist, in kritischen Bereichen nahe der Belastungsgrenze exakte Aussagen zu erhalten. Besonders wichtig ist das, wenn eine Last in unterschiedlichen Bereichen der Gabel des Gabelstaplers gelagert wird. Die effektive Last geht dabei natürlich nur in den Druck des Hubzylinders ein, wobei dieser Druck auch bei Verlagern der Last auf der Gabel des Gabelstaplers konstant bleibt. Ganz anders sieht es dagegen im Neigezylinder aus, wo der Druck bei Verlagern der Last von der Gabelspitze zum Gabelende sich erheblich um über die Hälfte seines Wertes ändern kann, was anschaulich zeigt, daß mit dem Verlagern der Last in Richtung Gabelspitze die Unfallgefahr steigt. Gerade hier kann durch die feinere Aufteilung der Druckdifferenzen im oberen Lastbereich sehr genau ermittelt werden, welche Stellung der Last im Fahrbetrieb noch möglich ist, ohne daß die Gefahr der Entlastung der Hinterräder auftritt und damit die Steuerung versagt.

Eine Vorrichtung zur Durchführung des Verfahrens besteht im wesentlichen aus je einem Hub- und einem Neigezylinder mit diesen zugeordneten Druckmeßfühlern und diesen nachgeschalteter Auswerteeinrichtung, wobei jedem Druckmeßfühler eine Leuchtdiodenreihe zugeordnet ist, deren einzelne Leuchtdioden bei einem bestimmten vom Druck im jeweiligen Zylinder abhängigen elektrischen Wert aufleuchten und die Leuchtdiodenreihen gegenläufig und parallel einander zugeordnet sind.

Durch das gegenläufige Anordnen der beiden Leuchtdiodenreihen laufen die aufleuchtenden Lichtpunkte aufeinander zu, wobei gleichzeitig die Druckdifferenz, die die einzelnen Dioden zum Aufleuchten bringen, in den jeweiligen Druckzylindern abnimmt, obwohl der Druck als solcher steigt. Wenn sich zwei Leuchtdioden überdecken, d.h. wenn die Leuchtdiodenreihe des Hubzylinders und die parallel dazu angeordnete Leuchtdiodenreihe des Neigezylinders so weit aufeinander zugelaufen sind, daß zwei parallel zueinander liegende Leuchtdioden gleichzeitig aufleuchten, so liegt eine Überlastung vor, die optisch und/oder akustisch angezeigt wird.

Vorteilhaft ist dabei gemäß einer weiteren Ausgestaltung der Erfindung den Leuchtdiodenreihen als optisches Signal ein Betriebs- und ein Warnanzeigefeld zugeordnet. Das Betriebsfeld wird üblicherweise als grüne Leuchtfläche ausgeführt, die zweckmäßig kontinuierlich leuchtet, wohingegen das Warnanzeigefeld als rote Fläche ausgeführt wird, die beim Überdecken der Leuchtdiodenreihen intermittierend aufleuchtet, also blinkt, wobei gleichzeitig das sonst grün leuchtende Betriebsanzeigefeld erlischt. Als zusätzliche Warnung kann zum Warnanzeigefeld ein Horn parallel geschaltet werden, so daß auch akustisch die Überlastung angezeigt wird.

Zweckmäßig ist jeweils die erste Leuchtdiode in den Leuchtdiodenreihen als Kontrolleuchte ausgeführt, die die Betriebsbereitschaft des Aggregates anzeigt.

<u>Beispiel</u>

Bei einem Stapler mit einer zulässigen Belastung von 2 Tonnen werden als Druckfühler Druckaufnehmer der Type EBM 6043-100, Hersteller E. Brosa Meßgeräte GmbH, in die Druckleitungen des Hub- und Kippzylinder eingesetzt. Den Druckgebern wurde je ein hydraulischer Dämpfer vorgeschaltet. Diese Druckgeber wurden über eine Verstärkungsschaltung mit zwei Leuchtdiodenreihen verbunden, die je 10 Leuchtdioden aufwiesen und in einem Kästchen am Armaturenbrett des Staplers befestigt waren. Im unbelasteten Zustand des Staplers brannte nach Einschalten der Zündung jeweils eine Lampe am Anfang einer Lichtreihe. Diese Kontrollampe zeigte an, daß die Belastungsmeßanlage eingeschaltet war. Beide Zylinder waren zusätzlich mit Manometern versehen, um den jeweils vorhandenen Druck ablesen zu können. Auf die Gabel wurde eine Last von 1.950 kp aufgebracht und auf der Gabel verschoben. Der im Hubzylinder angezeigte Druck betrug während der gesamten Versuchsdauer 83 bar, die Belastung im Neigezylinder änderte sich bei einem Gabelnennabstand von 500 mm entsprechend einem Abstand der Last vom Drehpunkt (Rad-Lastabstand) von 980 mm von 45 bar bei Verlagerung der Last in Richtung Gabelspitze um 280 mm auf einen Drehpunktabstand von 1.260 mm auf 58 bar und verringerte sich durch Verlagern in Richtung des Hubmastes auf 27 bar bei einem Abstand vom Drehpunkt von 600 mm.

Im Druckgeber ändert sich mit unterschiedlichem Druck der Widerstand, d.h. der Widerstand sinkt mit zunehmendem Druck. Bei einer Speisespannung von 15 Volt und einem Druck von 0 bar, also im entlasteten Zustand, des Druckzylinders ergibt sich ausgangsseitig eine Spannung von 0 mV, d.h., daß keine Anzeige erfolgt. Die maximale Ausgangsspannung beim maximalen Nenndruck des Druckgebers beträgt 12 mV. Diese Spannung wird verstärkt. Dabei leuchten alle angeschlossenen Dioden der Schaltreihe auf. Mit sinkender Spannung und damit mit sinkendem Druck im Zylinder werden entsprechend weniger Dioden zur Anzeige gebracht. Die Steuerung ist also spannungsabhängig.

Im vorliegenden Beispiel sind den Druckgebern hydraulische Dämpfer vorgeschaltet. Es ist jedoch möglich, über eine Widerstandsschaltung eine elektrische Dämpfung zu erreichen. Ziel ist in beiden Fällen, kurzfristig auftretende Überlastungen, wie sie beispielsweise durch Druckanstieg in den Zylindern beim einmaligen Überfahren eines kleineren Schlagloches dahingehend auszugleichen, daß die Druckspitzen abgeschnitten werden und nur bei länger andauernder Überlastung eine Anzeige erfolgt. Unter länger andauernder Überlastung ist dabei ein Zeitraum von gleich oder größer einer Sekunde zu verstehen. Durch diese Maßnahme wird sichergestellt, daß nicht geringfügige Überlastungen, die durch Schläge oder Stöße auftreten, als solche aber wegen der Kurzfristigkeit noch im Rahmen der zulässigen Werte liegen, als Überlastung optisch und akustisch angezeigt werden.

Anzeigeseitig ergab sich bei diesem Versuch, daß bei Nennlast und Gabelnennabstand je fünf Dioden für die Anzeige der Belastung im Neigungszylinder und im Hubzylinder brannten, d.h., daß der Stapler einsatzfähig war, aber nicht weiter belastet werden durfte.

Bei Verschieben der Last in Richtung Gabelspitze auf einen Drehpunktabstand von 1.100 mm leuchteten bereits zwei zusätzliche Dioden der Leuchtdiodenreihe des Neigungszylinders auf, d.h., daß bei gleicher Belastung des Hubzylinders jetzt eine Überlastung des Gabelstaplers vorlag, die im Versuch durch weiteres Verschieben der Last bis auf einen Rad-Lastabstand von 1.260 mm auf das Aufleuchten der siebten Diode der Leuchtdiodenreihe des Neigungszylinders gesteigert werden konnte, so daß sich ohne Änderung der Nennlast und damit der Belastung im Hubzylinder eine Überdeckung von zwei Leuchtdioden ergab, die ganz klar die Aussage "Überlastung durch falsche Anordnung der zu transportierenden Last" sichtbar machte.

Beim Verschieben der Last in die entgegengesetzte Richtung, also beim Annähern der Last an den Hubmast des Gabelstaplers, ergab sich beim Rad-Lastabstand von 800 mm bereits das Erlöschen einer Diode in der absoluten Endstellung, also im Rad-Lastabstand von 600 mm erloschen zwei weitere Leuchtdioden, so daß nur noch zwei Leuchtdioden dieser Reihe brannten und eine Sicherheit angezeigt wurde, die ein Befahren einer Gefällestrecke gestattete.

Als Druckdifferenz für die einzelnen Dioden des Hubzylinders war im Bereich bis zur maximalen Nennlast eine Stufung von 500 kp zugrundegelegt, darüber bis zu einer Überlast von 25% eine feinere Stufung von je 100 kp. Analog dazu war die Belastung des Neigezylinders angegeben, wobei allerdings hier vom Drehmoment ausgegangen und das Drehmoment entsprechend gestuft wurde. Eine Überlastung von 25%, die nach derzeitigen Vorschriften von jedem Stapler kurzzeitig verkraftet werden kann, ist durch diese Anordnung abgedeckt. Der Fahrer kann dadurch das ungefähre Gewicht der Last beim Anheben ablesen und hat damit auch die Möglichkeit, beim Beladen von Fahrzeugen Überlastung der Fahrzeuge zu vermeiden.

Weitere Daten sind aus dem nachstehend wiedergegebenen Diagramm in Verbindung mit den folgenden Tabellen ersichtlich.

Druck im Neigezylinder und Zahl der aufleuchtenden Leuchtdioden

(1. Diode ist eine Kontrolleuchte)
20 bar 1 + 1 Leuchtdiode
32 bar 1 + 2 Leuchtdioden
42 bar 1 + 3 Leuchtdioden
50 bar 1 + 4 Leuchtdioden
54 bar 1 + 5 Leuchtdioden
58 bar 1 + 6 Leuchtdioden

62 bar 1 + 7 Leuchtdioden
66 bar 1 + 8 Leuchtdioden
70 bar 1 + 9 Leuchtdioden

| Druck im Hubzylinder und Zahl der aufleuchtenden Leuchtdioden in Abhängigkeit von der Lastaufnahme (1. Diode ist eine Kontrolleuchte) | | |
|---|---|---|
| Belastung | Druck | Anzeige |
| 500 kp | 34 bar | 1 + 1 Leuchtdiode |
| 1000 kp | 52 bar | 1 + 2 Leuchtdioden |
| 1500 kp | 70 bar | 1 + 3 Leuchtdioden |
| 2000 kp | 85 bar | 1 + 4 Leuchtdioden |
| 2100 kp | 89 bar | 1 + 5 Leuchtdioden |
| 2200 kp | 93 bar | 1 + 6 Leuchtdioden |
| 2300 kp | 97 bar | 1 + 7 Leuchtdioden |
| 2400 kp | 101 bar | 1 + 8 Leuchtdioden |
| 2500 kp | 105 bar | 1 + 9 Leuchtdioden |

Die Erfindung wird nachstehend anhand der Zeichnungen beschrieben.

Fig. 1 zeigt in schematischer Darstellung die Seitenansicht eines Gabelstaplers,
Fig. 2, 3 u. 4 als Ausschnitt aus dem Armaturenbrett die Leuchtdiodenreihe mit den Anzeigefeldern,
Fig. 5 eine Schaltungsanordnung.

Der Gabelstapler (10) ist mit einem Mast (18) ausgerüstet, der über ein Gelenk (11) im Bereich der Vorderräder (12) gelagert ist. In den Mast integriert ist der Hubzylinder (4), der über eine Anzeigeleitung (23) mit dem Druckmeßfühler (1) verbunden ist. Der Druckmeßfühler (1) ist im Armaturenbrett (9) gelagert. In dem Mast (18) gleitet, betätigt durch die Kette (13), die Gabel (14), die zur Aufnahme der Last (15) dient. Der Neigezylinder (5) ist im Rahmen des Gabelstaplers (10) gelagert und greift im unteren Bereich des Mastes (18) an. Über eine Leitung (24) ist er mit einem Druckmeßfühler (1') verbunden, der ebenfalls im Armaturenbrett (9) angeordnet ist. Mit dem Lenkrad (19) werden die Hinterräder (20) gesteuert, auf denen das Kontergewicht P ruht. Das Kontergewicht P dient zum Ausgleich der Last (15), die im Lastangriffspunkt (16) angreift, wobei der Achsmittelpunkt (17) in der Mitte der Achse der Vorderräder (12) den Drehpunkt bildet. Der Abstand zwischen dem Lastangriffspunkt (16) und dem Achsmittelpunkt (17) wird als Radlastabstand $R_L$ bezeichnet. Beide Zylinder (4) und (5) werden durch ein übliches Hydraulikaggregat (28) über Leitungen (25, 26, 27) betrieben, wobei die Ventile und Steuereinrichtungen nicht gezeigt sind.

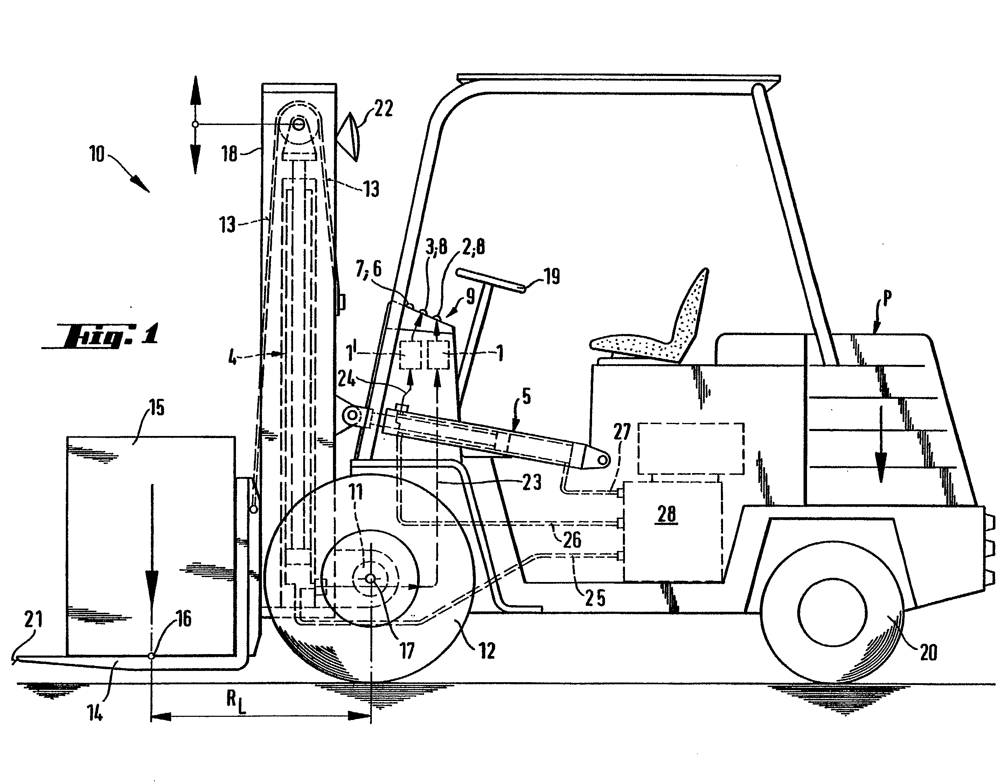

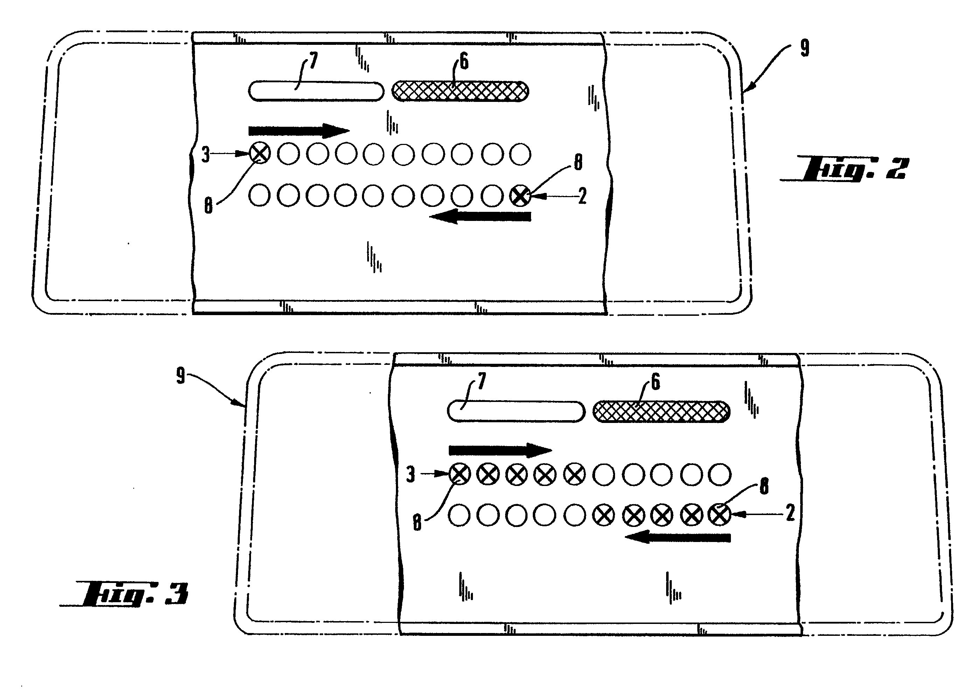

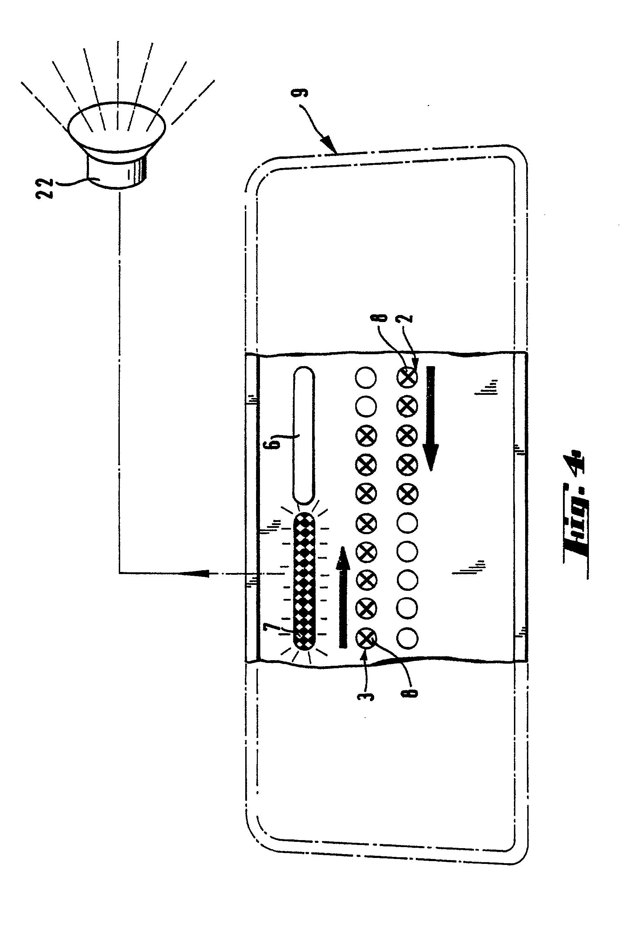

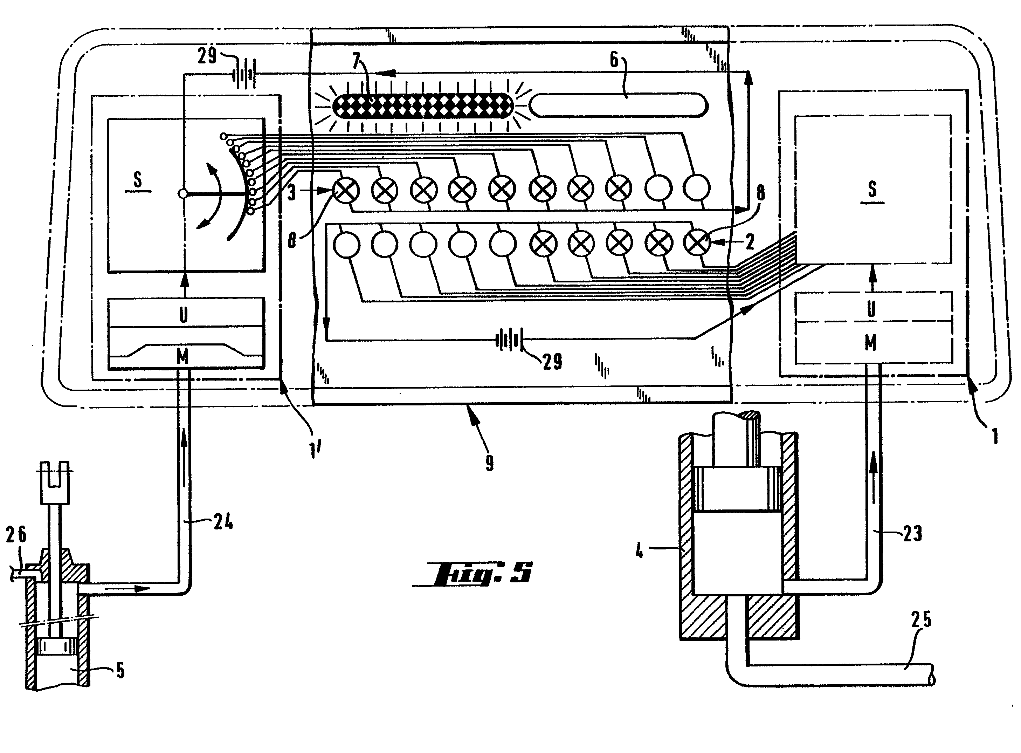

Mit dem Einschalten der Zündung leuchten, wie in Fig. 2 dargestellt, die Kontrolleuchten (8) auf, die sowohl den rechten Anfang der Leuchtdiodenreihe (2) für den Hubzylinder (4) als auch den linken Anfang für die Leuchtdiodenreihe (3) für den Neigezylinder (5) bilden. Über den beiden Leuchtdiodenreihen (2, 3) ist auf der rechten Seite das Betriebsanzeigefeld (6) angeordnet, das jetzt nach Einschaltung der Zündung grün aufleuchtet. Links daneben befindet sich das Warnanzeigefeld (7), das rot aufleuchtet, wenn eine Überdeckung der leuchtenden Leuchtdioden in den Leuchtdiodenreihen (2, 3) erfolgt (Fig. 4).

Fig. 3 zeigt, daß sowohl die Leuchtdiodenreihe (2) als auch die Leuchtdiodenreihe (3) teilweise aufleuchtet, ohne daß eine Überschneidung eintritt. Diese Darstellung entspricht einer Vollauslastung des Gabelstaplers bei Nennlast, wie im Beispiel angegeben. Auch hier leuchtet das Betriebsanzeigefeld (6) grün und zeigt damit die Betriebsbereitschaft des Staplers an.

Fig. 4 zeigt einen weiteren im Beispiel angesprochenen Belastungsfall, bei dem die Last weit nach vorne in Richtung der Gabelspitze (21) der Gabel (14) des Gabelstaplers (10) verlagert ist, wodurch sich im Neigezylinder (5) Druckanstieg ergab, der zum Aufleuchten von weiteren Leuchtdioden in der Leuchtdiodenreihe (3) des Neigezylinders (5) führte. Durch das dabei erfolgte Überschneiden von Leuchtdioden erlosch im Betriebsanzeigefeld (6) das grüne Licht und im Warnanzeigefeld (7) blinkte das Rotlicht auf. Gleichzeitig wurde die Hupe (22) betätigt.

Fig. 5 zeigt eine Schaltungsanordnung, in welcher (M) die Membran der Meßfühler 1 bzw. 1', (U) einen Umsetzer, (S) eine Schalteinheit und (29) eine Stromquelle darstellt. Geschaltet ist hier das Beispiel nach Fig. 4.

**Patentansprüche**

1. Verfahren zum Signalisieren der Be- und Überlastung von hydraulisch betätigten Ladeplattformen, Auslegern, Kränen und insbesondere Gabelstaplern, bei denen der jeweilige Druck im Hub- und Neigezylinder durch Druckmeßfühler erfaßt, in elektrische Signale umgewandelt und ggf. nach Verstärkung in optische und/oder akustische Signale umgesetzt wird, dadurch gekennzeichnet, daß die vom Druck im Hub- und im Neigezylinder erzeugten elektrischen Signale je einer Leuchtdiodenreihe zugeführt werden, deren einzelne Leuchtdioden auf jeweils einen bestimmten, durch den jeweiligen Druck erzeugten, elektrischen Wert ansprechen, wobei die Anzahl der aufleuchtenden Leuchtdioden mit zunehmendem Druck steigt und bei Überschreiten einer bestimmten Anzahl aufleuchtender Leuchtdioden ein optisches und/oder akustisches Signal ausgelöst wird.

2. Verfahren nach Anspruch 1, dadurch gekennzeichnet, daß die Belastung im Druck- und Neigezylinder durch die Leuchtdiodenreihen kontinuierlich angezeigt wird.

3. Verfahren nach einem der Ansprüche 1 und 2, dadurch gekennzeichnet, daß die dem Hubzylinder zugeordnete Leuchtdiodenreihe die im jeweiligen Belastungszustand vorhandene Lenkstabilität anzeigt.

4. Verfahren nach einem der Ansprüche 1 bis 3, dadurch gekennzeichnet, daß einander zugeordnete Leuchtdioden von Hub- und Neigezylinder bei unterschiedlicher Druckbeaufschlagung anzeigen.

5. Verfahren nach einem der Ansprüche 1 bis 4, dadurch gekennzeichnet, daß mit Zunehmen des Ansprechdruckes die zum Aufleuchten der Leuchtdioden erforderliche Druckdifferenz zwischen einander folgenden Leuchtdioden geringer wird.

6. Verfahren nach einem der Ansprüche 1 bis 5, dadurch gekennzeichnet, daß das akustische Signal in seiner Frequenz von den üblichen im Fahrbetrieb benutzten Frequenzen der Hupen abweicht.

7. Vorrichtung zur Durchführung des Verfahrens nach einem der Ansprüche 1 bis 6, die im wesentlichen aus je einem einem Hub- (4) und einem Neigezylinder (5) zugeordneten Druckmeßfühler (1) und diesem nachgeschalteter Auswerteeinrichtung besteht, dadurch gekennzeichnet, daß jedem Druckmeßfühler (1) eine Leuchtdiodenreihe (2) zugeordnet ist, deren einzelne Leuchtdioden (3) bei einem bestimmten, vom Druck im jeweiligen Zylinder (4, 5) abhängigen elektrischen Wert aufleuchten und die Leuchtdiodenreihen (2) gegenläufig und parallel zueinander angeordnet sind.

8. Vorrichtung nach Anspruch 7, dadurch gekennzeichnet, daß jeweils die erste Leuchtdiode eine Kontrolleuchte (8) ist.

9. Vorrichtung nach einem der Ansprüche 7 und 8, dadurch gekennzeichnet, daß den Leuchtdiodenreihen (2, 3) als optisches Signal ein Betriebs- (6) und ein Warnanzeigefeld (7) zugeordnet ist.

**Claims**

1. Method for signalling the loading and overloading of hydraulic loading platforms, booms, cranes and especially fork-lift trucks, in which the pressure in each of the lifting cylinder and the tilting cylinder is detected by pressure sensors, converted into electrical signals and, optionally after being amplified, converted into optical and/or acoustic signals, characterised in that each of the electrical signals produced by the pressure in the lifting cylinder and the tilting cylinder is supplied to a series of light-emitting diodes, the individual light-emitting diodes in which respond to a specific electrical value produced by the particular pressure, the number of light-emitting diodes that light up increasing as the pressure increases and an optical and/or acoustic signal being triggered when a specific number of lit-up light-emitting diodes is exceeded.

2. Method according to claim 1, characterised in that the load in the lifting cylinder and the tilting cylinder is indicated continuously by the series of light-emitting diodes.

3. Method according to claim 1 or 2, characterised in that the series of light-emitting diodes associated with the lifting cylinder indicates the steering stability of the particular loaded state.

4. Method according to one of claims 1 to 3, characterised in that light-emitting diodes of the lifting cylinder and the tilting cylinder that are associated with one another indicate when subjected to different pressures.

5. Method according to one of claims 1 to 4, characterised in that as the response pressure increases the difference between the pressures of successive light-emitting diodes required to light up the light-emitting diodes decreases.

6. Method according to one of claims 1 to 5, characterised in that the frequency of the acoustic signal is different from the frequencies of the horns customarily used in vehicle operation.

7. Apparatus for carrying out the method according to one of claims 1 to 6, which consists substantially of pressure sensors (1, 1') one associated with a lifting cylinder (4) and one with a tilting cylinder (5), and an evaluating device connected downstream thereof, characterised in that associated with each pressure sensor (1, 1') is a series (2, 3) of light-emitting diodes, the individual diodes in which light up at a specific electrical value dependent on the pressure in each particular cylinder (4, 5), and the series (2, 3) of light-emitting diodes run in opposite directions and parallel to one another.

8. Apparatus according to claim 7, characterised in that the first light-emitting diode in each case is a monitoring lamp (8).

9. Apparatus according to one of claims 7 and 8, characterised in that an operating (6) and a warning indicator field (7), in the form of an optical signal, is associated with the series (2, 3) of light-emitting diodes.

## Revendications

1. Procédé de signalisation de la charge et de la surcharge de plates-formes de chargement, bras en porte à faux, grues et notamment élévateurs à fourche, actionnés hydrauliquement, dans lesquels la pression existant dans le cylindre de levée et le cylindre d'inclinaison est détectée par des capteurs de pression, transformée en signaux électriques et, après amplification éventuelle, convertie en signaux optiques et/ou acoustiques, caractérisé par le fait que les signaux électriques engendrés par la pression dans le cylindre de levée et le cylindre d'inclinaison sont amenés chacun à une série de diodes électroluminescentes dont les diodes électroluminescentes individuelles répondent chacune à une valeur électrique déterminée, produite par la pression concernée, le nombre des diodes électroluminescentes allumées croissant avec la pression, et un signal optique et/ou acoustique étant déclenché en cas de dépassement d'un nombre déterminé de diodes électrominescentes allumées.

2. Procédé selon revendication 1, caractérisé par le fait que la charge dans le cylindre de levée et dans le cylindre d'inclinaison est indiquée de manière continue par les séries de diodes électroluminescentes.

3. Procédé selon l'une des revendications 1 et 2, caractérisé par le fait que la série de diodes électroluminescentes associée au cylindre de levée indique la stabilité de direction existant dans chaque état de charge.

4. Procédé selon l'une des revendications 1 à 3, caractérisé par le fait que des diodes électroluminescentes associées du cylindre de levée et du cylindre d'inclinaison, fournissent des indications en cas de sollicitation de pression différente.

5. Procédé selon l'une des revendications 1 à 4, caractérisé par le fait que la différence de pression entre diodes électroluminescentes successives, nécessaire pour l'allumage des diodes électroluminescentes, diminue avec l'augmentation de la pression de réponse.

6. Procédé selon l'une des revendications 1 à 5, caractérisé par le fait que le signal acoustique possède une fréquence différant des fréquences habituelles des avertisseurs sonores utilisées pendant le fonctionnement.

7. Dispositif de mise en œuvre du procédé selon l'une des revendications 1 à 6, constitué, pour l'essentiel, par des capteurs de pression (1, 1') dont un est associé à un cylindre de levée (4) et un à un cylindre d'inclinaison (5), et par un dispositif d'interprétation associé à chacun de ces capteurs de pression, caractérisé par le fait qu'à chaque capteur de pression (1, 1') est associée une série (2, 3) de diodes électroluminescentes, dont les diodes individuelles s'allument pour une certaine valeur électrique dépendant de la pression dans le cylindre concerné (4, 5), et les séries (2, 3) de diodes électroluminescentes sont agencées en parallèle et en opposition.

8. Dispositif selon revendication 7, caractérisé par le fait que chaque première diode électroluminescente est un témoin lumineux de contrôle (8).

9. Dispositif selon l'une des revendications 7 et 8, caractérisé par le fait qu'un champ indicateur de marche (6) et un champ indicateur avertisseur (7) sont associés, en tant que signal optique, aux séries de diodes électroluminescentes (2, 3).

_Fig. 1_

R_L

EP 0 236 804 B1

*Fig. 2*

*Fig. 3*

EP 0 236 804 B1

_Fig. 4_

Fig. 5